# DEMANDE DE BREVET EUROPEEN

(11) **EP 4 478 605 A1**
(43) Date de publication de la demande: **18.12.2024**
(21) Numéro de dépôt: 23315245.3
(22) Date de dépôt: 14.06.2023
(51) Int. Cl.: H02S 20/22, F24S 20/67

(54) **SYSTÈME DE FIXATION DE PANNEAU SOLAIRE SUR UN TOIT, ET STRUCTURE OU ABRI PORTANT AU MOINS UN PANNEAU SOLAIRE SUR SON TOIT FIXE VIA LEDIT SYSTÈME**

(71) Demandeur: Closura, 17290 Le Thou (FR)
(72) Inventeur: Fontaine, François, 17220 LA JARNE (FR); Charles, Christophe, 17000 LA ROCHELLE (FR)
(74) Mandataire: IP Trust

(57) **Abrégé**

L'invention porte sur un système de fixation d'au moins un panneau solaire (20) sur un cadre de toit (100) ou une paroi de toit, l'au moins un panneau solaire étant du type mono-facial ou bi-facial, le système comprenant :
∘ au moins un support ou une attache (2) positionnable le long d'un côté du cadre (1, 100),
∘ au moins une poutre (3) fixée à l'au moins un support, reliant deux côtés opposés du cadre, agencé pour porter au moins en partie l'au moins un panneau solaire (20).

## Description

### DOMAINE TECHNIQUE DE L'INVENTION

L'invention concerne plus particulièrement un système de fixation d'au moins un panneau photovoltaïque ou solaire sur un toit comprenant au moins un panneau de toiture, en particulier connu par la marque déposée « isosta » et/ou « isotoit » via au moins un profilé, chaque panneau étant du type monofacial ou bi-facial. L'au moins un panneau de toiture peut aussi être un panneau métallique, par exemple bac acier dit aussi « tôle d'acier nervurée » ou encore « toiture en acier profilé ».

Elle concerne plus particulièrement un système de fixation d'au moins un panneau solaire sur un cadre de toit ou une paroi de toit, de préférence comprenant quatre côtés, de préférence présentant une surface blanche, le panneau solaire étant du type mono-facial ou bi-facial, le système comprenant :
au moins un support ou une attache positionnable le long d'un côté du cadre, de préférence deux supports en vis-à-vis,
au moins une poutre fixée à l'au moins un support, reliant deux côtés opposés du cadre, agencé pour porter au moins en partie l'au moins un panneau solaire,
de préférence, l'au moins un côté de cadre comprend une surface présentant plusieurs zones d'attache réparties verticalement afin de régler la hauteur de positionnement de l'au moins une poutre, de préférence en forme de rainure.

L'invention porte également sur une structure du type abri comprenant au moins un panneau solaire monté sur la structure via le système de fixation.

La structure ou l'abri est par exemple un carport une ombrière, un abri à vélo, un abri de jardin, un abri camping, un abri voiture, un abri moto, un abri camping-car, un abri scooter et vélos, et tout type de véhicules ou mobilités électriques et/ou un abri pour matériel tondeuses ou visseuses, ou un volume appelé parfois « box », ou un espace de travail, ou plus généralement un espace ou un volume fermé présentant une surface au sol inférieure ou égale à 20 mètres carrées, de préférence réalisé au moins en partie en aluminium, par exemple aluminium laqué, ou en acier divers.

### ETAT DE LA TECHNIQUE

L'engouement pour les panneaux photovoltaïques, dit aussi solaires, a conduit à équiper différents types de bâtiments ou de structures. Par exemple, on connaît des carports ou des abris à vélo équipés de panneaux solaires, ces structures comprenant une ossature dont le toit, la surface réalisant la fonction d'abri, est formé uniquement par des panneaux solaires.

Bien que satisfaisant, ces exemples présentent parfois un aspect esthétique discutable selon l'avis de certaines personnes.

En outre, dans le cas de structures fermées ou au moins présentant déjà un toit, il n'est pas possible d'ajouter des panneaux solaires du fait de la charge trop importante au regard de l'ossature de ladite structure.

Il est ainsi désireux de proposer une solution permettant d'équiper des structures, notamment des structures non agencées pour recevoir ou porter des équipements supplémentaires, avec des panneaux solaires tout en améliorant leur aspect esthétique.

### OBJET DE L'INVENTION

A cet effet, et selon un premier aspect, l'invention propose un système de fixation d'au moins un panneau solaire sur un cadre existant de toit d'un abri caractérisé en ce qu'il comprend
- une armature agencée pour être disposée sur le cadre existant, l'armature présentant une surface d'encadrement intérieure,
- au moins une poutre reliant l'armature en deux points et agencée pour porter au moins en partie l'au moins un panneau solaire,
- au moins un support de poutre, reliant une face de poutre à l'armature.

Ainsi, le système selon l'invention permet de disposer au moins un panneau solaire sur une structure existante qui n'est pas agencée pour recevoir un tel équipement. Avantageusement, il permet aussi de ne pas altérer l'au moins un panneau solaire ni même un panneau ou une paroi de toiture, en particulier, ledit système permet à l'au moins un panneau solaire de ne pas entrer en contact avec le panneau ou la paroi de toiture, qui n'est pas en capacité de recevoir les charges (poids) supplémentaires de l'au moins un panneau solaire.

Pour ce qui précède et pour la suite de la description, on entend par :
- cadre existant, un cadre ou une ossature ou un moyen réalisant la fonction de porter ou soutenir un ou des éléments ou panneaux de toiture, en particulier d'une structure de type abri, par exemple carport agencé pour surmonter ou abriter un véhicule de type deux roues ou quatre roues ;
- panneau solaire, un panneau comprenant des cellules solaires agencées pour recevoir des rayons lumineux issus du soleil et transformer ces rayons en signal électrique, et/ou de manière à générer de l'électricité à partir de la lumière solaire reçue sur lesdites cellules ;

Selon d'autres caractéristiques avantageuses et non limitatives de l'invention, prises seules ou selon toute combinaison techniquement réalisable, le système de fixation peut comprendre les caractéristiques suivantes :
- l'armature présente une forme générale similaire ou identique au cadre existant, de préférence le cadre existant présente une forme polygonale, en particulier présentant quatre côtés, par exemple de forme rectangulaire ;
- l'armature comprend des moyens faisant saillie sur, au moins une partie ou toute, une surface d'encadrement intérieure, de préférence au moins une rainure, par exemple s'étendant dans une direction parallèle à la direction du côté de l'armature considéré, de manière à régler la position de l'au moins une poutre, de préférence d'une extrémité de l'au moins une poutre, dans une direction normale au plan géométrique formé par l'armature ;
- de préférence les moyens faisant saillie comprennent plusieurs rainures superposées les unes au-dessus des autres le long de la surface d'encadrement ;
- l'armature présente une épaisseur supérieure ou égale à l'épaisseur de l'au moins un panneau solaire, de manière à masquer sa visibilité d'un point de vue latérale ;
- l'armature entoure l'au moins un panneau solaire ;
- l'armature présente une forme polygonale, et l'au moins une poutre relie deux côtés de l'armature ;
- l'armature comprend plusieurs longerons reliés entre eux afin de former la forme polygonale, notamment rectangulaire ;
- selon un mode de réalisation, le cadre de toit est réalisé avec plusieurs longerons reliés entre eux, et au moins un longeron de l'armature est identique au longeron du cadre de toit, cette caractéristique permettant de réduire les coûts de fabrication ;
- de préférence les longerons de l'armature sont identiques aux longerons du cadre de toit ;
- l'armature est superposée sur le cadre de toit ;
- l'au moins un support de poutre comprend au moins une rainure, de préférence dont la direction est parallèle à la direction du côté de l'armature considéré, de manière à régler la position de l'au moins une poutre dans le plan géométrique formé par l'armature ;
- de préférence, le système comprend deux supports de poutre afin de fixer l'au moins une poutre à l'armature ; les supports étant disposés à des hauteurs différentes afin de réaliser une pente nécessaire à l'évacuation des eaux entre les poutres en vis-à-vis ;
- le système comprend au moins une poutre pouvant être disposée sous l'au moins un panneau, par exemple au milieu dudit panneau, par exemple du type de chevron ; le système peut comprendre plusieurs poutres disposées sous l'au moins un panneau ;
- le système comprend au moins une poutre pouvant être disposée le long d'un côté latéral, par exemple longitudinal ou transversal, en particulier en contact avec la face d'épaisseur de l'au moins un panneau, pour soutenir l'au moins un panneau ; le côté opposé pouvant être soutenu par l'armature ;
- le système comprend deux poutres s'étendant parallèlement et de part et d'autre de l'au moins un panneau, chaque poutre étant disposée le long d'un côté latéral, par exemple longitudinal ou transversal, en particulier en contact avec la face d'épaisseur de l'au moins un panneau, pour soutenir l'au moins un panneau ;
- de préférence, l'au moins une poutre ou les poutres s'étendant latéralement sont des profilés ;
- de préférence, l'au moins un profilé porte au moins en partie, par exemple au moins une face de l'au moins un panneau ;
- l'au moins une poutre est un profilé présentant une section transversale en forme de « L » ou de « T » ;
- selon un mode de réalisation, il est prévu l'utilisation de deux profilés en forme de « L » adossées, de préférence l'une à l'autre, de préférence pour des dimensions inférieures à 3630 millimètres ;
- selon un autre mode de réalisation, il est prévu l'utilisation d'un profilé en forme de « T » inversé pour dimensions supérieurs à 3630 mm et jusqu'à 7250 mm en profondeur ;
- selon une variante, il est prévu l'utilisation d'un profilé en forme de « T » inversé pour des dimensions inférieurs à 3630 mm ;
- l'au moins un panneau solaire (photovoltaïque et autres types...) comprend une seule face réceptrice de rayons solaires, dit mono-facial, ou comprend deux faces réceptrices opposées, de préférence sur une face dite avant et une face dite arrière de rayons solaires, dit bi-facial ;
- un ou plusieurs des éléments du système de fixation sont réalisés en aluminium, de préférence laqué.

Selon un deuxième aspect, l'invention propose une structure comprenant un cadre de toit portant au moins un élément de toiture, au moins un poteau pour maintenir en hauteur l'au moins un élément de toiture, caractérisée en ce qu'elle comprend au moins un panneau solaire disposé au-dessus dudit au moins un élément de toiture par l'intermédiaire d'un système de fixation comprenant :
- au moins une poutre reliant le cadre de toit en deux points et agencée pour porter au moins en partie l'au moins un panneau solaire,
- au moins un support de poutre, reliant une face de poutre au cadre de toit.

Selon un premier mode de réalisation, la structure peut comprendre en outre une armature afin de compléter le système de fixation de l'au moins un panneau solaire. L'armature peut comprendre une ou plusieurs caractéristiques du premier aspect. Elle permet de renforcer la structure ou le cadre de toit de la structure permettant ainsi d'ajouter l'au moins un panneau solaire sur une structure de type abri.

Selon un deuxième mode de réalisation, le cadre de toit est intrinsèquement renforcé par une augmentation de section d'au moins un longeron composant le cadre de toit. En dehors de ce mode de réalisation, le système de fixation du deuxième aspect peut comprendre une ou plusieurs des caractéristiques du premier aspect.

De préférence, l'au moins un panneau solaire est distant de l'au moins un élément de toiture ou paroi de toiture de plusieurs centimètres afin de permettre une ventilation naturelle, de préférence d'une distance comprise entre 5 et 10 centimètres, de préférence entre 80 mm et 90mm. Cette caractéristique permet :
- d'éviter surchauffe de l'au moins un panneau solaire,
- d'augmenter la productivité des panneaux solaires.

De manière préférentielle, l'au moins un panneau solaire est du type monofacial ou bi-facial.

De préférence, l'au moins un élément de toiture présente une surface réfléchissante des rayons lumineux, en particulier des rayons du soleil. De préférence, l'au moins un élément de toiture présente une surface de couleur blanche. Cette caractéristique permet l'augmentation de la productivité grâce à un panneau réfléchissant, de préférence blanc, par exemple connu sous la marque déposée « isotoit » dans le cadre des panneaux bifaciaux. Cet effet est connu comme albédo ou phénomène d'albedo.

L'utilisation de panneaux solaires bifaciaux en association avec des panneaux de toiture réfléchissant la lumière, en particulier les rayons du soleil, de préférence de couleur blanc permet, grâce à la surface « blanche » du dessus du panneau, d'augmenter la productivité des panneaux solaires.

Selon un mode de réalisation, l'au moins un élément de toiture est un panneau ou une paroi de toiture comprenant plusieurs couches superposées comprenant une couche de matériau isolant entre deux couches de revêtement. De préférence au moins une couche de revêtement est de couleur blanche, en particulier disposé en vis-à-vis de l'au moins un panneau solaire, qui est de préférence un panneau solaire bi-facial.

De préférence, l'au moins un panneau ou une paroi de toiture est du type connu sous les marques déposées « isosta » et/ou « isotoit ». Selon un mode de réalisation, l'au moins un panneau présente une épaisseur de 32 millimètres est soutenu ou porté par au moins un chevron disposé sous ledit au moins un panneau. Selon un autre mode de réalisation, l'au moins un panneau présente une épaisseur de 65 millimètres et est dit « autoportant », ne nécessitant pas de chevron.

Selon des modes de réalisation particulier, l'au moins les panneaux de toiture sont des panneaux sandwich dont les parements sont en tôles planes d'aluminium et l'âme composée de plaques de polystyrène expansé (EPS) et/ou de polystyrène extrudé (XPS) avec ou sans contre-parement acoustique.

Les panneaux sont :
- soit maintenus sur 2 côtés le long des montants ou sur 3 ou 4 côtés sur des profilés supports ;
- soit en appuis sur les deux petits côtés, posés sur les traverses haute et basse (panneaux autoportants). La jonction longitudinale entre les panneaux est assurée par une clé en PVC munie de garnitures souples.

Les panneaux ont par exemple les dimensions suivantes :
- épaisseur : 16 mm à 85 mm ;
- longueur : entre 2 m et 7,50 m ;
- largeur : 1,20 m standard, sauf 1,190 m pour le panneau « ELS 550 » pour le montage en chevrons.

Selon un mode de réalisation particulier, le panneau de toiture peut comprendre les couches suivantes :
Couche 1 : Aluminium (0,7 mm - 2750kg/m3),
Couche 2 : PE (4 mm - 80kg/m3),
Couche 3 : XPS (15 à 80 mm - 33kg/m3),
Couche 4 : Aluminium (0,7 mm - 2750kg/m3).

Selon un mode de réalisation particulier, le panneau de toiture peut comprendre les couches suivantes :
Couche 1 : Aluminium (0,7 mm - 2750kg/m3),
Couche 2 : XPS (15 à 80 mm - 33kg/m3),
Couche 3 : Aluminium (0,7 mm - 2750kg/m3).

Selon un mode de réalisation particulier, la structure peut comprendre en outre des batteries électriques agencées pour stocker l'énergie électrique issue de l'au moins un panneau solaire.

En outre, la structure peut comprendre une borne de recharge électrique, par exemple relié à l'un des poteaux de la structure.

Selon un mode de réalisation, la structure peut présenter des dimensions suivantes : jusqu'à 5200 mm en profondeur par 7200 mm en longueur.

Selon un autre mode de réalisation particulier, la structure peut être reliée au réseau électrique public local.

De préférence, un ou plusieurs des éléments de la structure sont réalisés en aluminium, de préférence laqué.

Selon un autre aspect, l'invention propose un carport comprenant une structure selon l'une ou plusieurs des caractéristiques du deuxième aspect.

Selon un autre aspect, l'invention propose un abri à vélo comprenant une structure selon l'une ou plusieurs des caractéristiques du deuxième aspect.

Selon un autre aspect, l'invention propose un abri de jardin comprenant une structure selon l'une ou plusieurs des caractéristiques du deuxième aspect.

Selon un autre aspect, l'invention propose une ombrière comprenant une structure selon l'une ou plusieurs des caractéristiques du deuxième aspect.

### BREVE DESCRIPTION DES FIGURES

D'autres caractéristiques et avantages de l'invention ressortiront de la description détaillée de l'invention qui va suivre en référence aux figures annexées et dans lesquelles :
[Fig. 1] La figure 1 est une vue en perspective d'une structure du type abri selon un mode de réalisation de l'invention, comprenant un cadre de toit élevé par des poteaux, le cadre de toit portant des parois de toiture dont la face de dessus est de couleur blanche, et des panneaux solaires disposés au-dessus des parois de toiture ;
[Fig. 2] La figure 2 est une vue éclatée en perspective d'une structure conforme à la figure 1 ;
[Fig. 3] La figure 3 est une vue de dessus d'une structure selon un mode de réalisation de l'invention ;
[Fig. 4] La figure 4 est une vue de profil de la structure conforme à la figure 3 ;
[Fig. 5] La figure 5 est une vue éclatée en perspective d'un assemblage de panneaux solaires avec des poutres et supports de poutre selon un mode de réalisation ;
[Fig. 6] La figure 6 est une vue en perspective d'une poutre fixée à une armature par l'intermédiaire d'un support de poutre selon un mode de réalisation ;
[Fig. 7] La figure 7 est une vue de dessus d'une structure selon un mode de réalisation de l'invention ;
[Fig. 8] La figure 8 montre deux coupes partielles de supports de poutre de la figure 7 selon un mode de réalisation ;
[Fig. 9] La figure 9 moreprésente deux types de profilés portant au moins un panneau solaire, un profilé en forme de « T » d'une part et un profilé en forme de double « L » d'autre part selon un mode de réalisation.

Pour plus de clarté, les éléments identiques ou similaires des différents modes de réalisation sont repérés par des signes de référence identiques sur l'ensemble des figures. S'il existe des dimensions mentionnées sur les figures, celles-ci sont indicatives et correspondent un exemple de réalisation non limitatif.

### DESCRIPTION DETAILLEE DE L'INVENTION

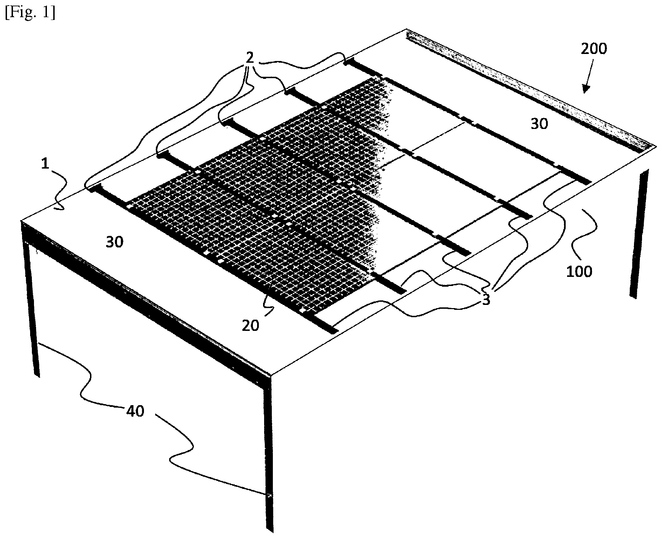

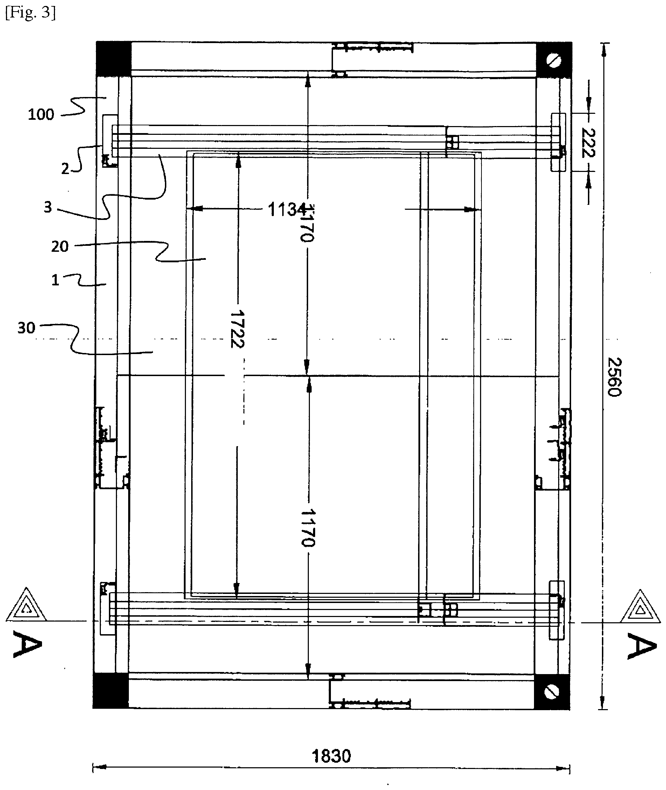

En relation avec les figures 1 à 4, il est illustré un mode de réalisation d'un abri 200 pouvant réaliser la fonction d'abri pour véhicule à deux roues ou à quatre roues, par exemple un carport.

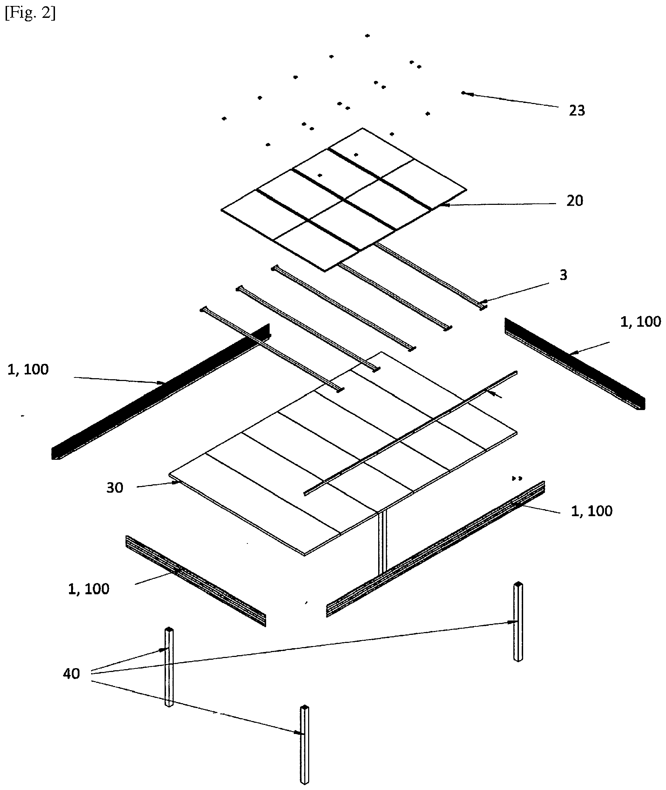

L'abri 200 comprend une structure réalisant une fonction d'ossature. L'abri 200 comprend quatre poteaux 40 (visibles en totalité sur la figure 2) et un cadre de toit 100 reliant les poteaux. Le cadre de toit présente une forme générale rectangulaire et comprend donc quatre côtés, chaque côté étant réalisé par un longeron qui relie deux poteaux.

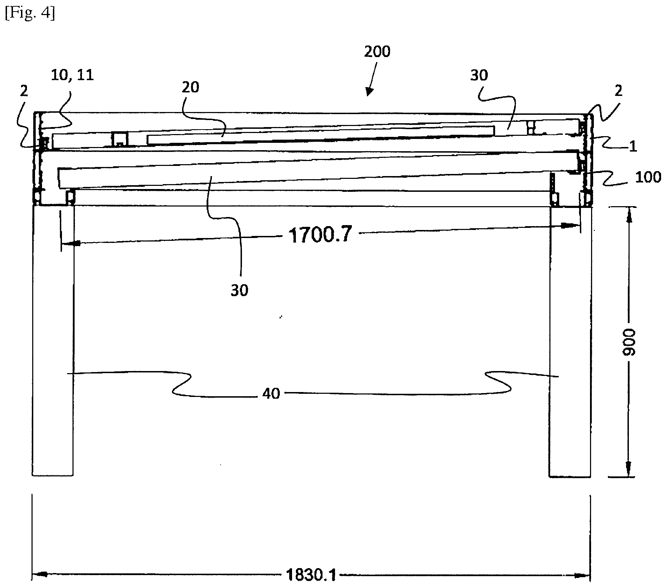

De préférence le cadre de toit 100 comprend une armature 1 superposée au cadre de toit, l'armature comprenant autant de longerons que les longerons de cadre de toit. En référence à la figure 2, chaque longeron de cadre de toit est apparié avec un longeron d'armature pour former un seul élément par côté. L'ensemble réalise un cadre de toit renforcé. Selon un mode de réalisation les longerons d'un couple sont superposés de manière à former un double longeron, dit aussi double poutre, voir par exemple figures 4 et/ou 6.

L'abri 200 comprend en outre des parois de toiture 30 du type connu sous la marque déposée isosta ou isotoit. En référence à la figure 4, les parois de toiture 30 se situent entre les longerons du cadre 100. Les parois de toiture 30 sont inclinées afin de permettre l'écoulement des eaux de pluie. L'assemblage de ces parois est connu de la personne du métier. Ces parois ne permettent pas d'être percées en particulier dans le cas présent visant à ajouter au moins un panneau solaire. De préférence, la face supérieure des parois de toiture est blanche, voir figure 1.

L'abri 200 comprend également des panneaux solaires 20 de types connus par la personne du métier. Ces panneaux sont disposés au-dessus des parois de toiture 30, de préférence distancées par une lame d'air d'une épaisseur d'environ 8 à 9 centimètres, voir en particulier la figure 4. Les panneaux sont également inclinés afin de permettre l'écoulement des eaux de pluie.

De préférence, les panneaux solaires sont bi-faciaux, ou présentant des cellules solaires ou photovoltaïques sur les deux faces principales : la face d'exposition au soleil et la face opposée destinée à recevoir la lumière réfléchie des parois de toiture 30.

La superficie des panneaux solaires est inférieure à la superficie des parois de toiture afin de favoriser la ventilation naturelle, la réflexion des rayons du soleil des parois de toiture vers la face opposée des panneaux solaires et permettre l'accessibilité pour la maintenance des panneaux solaires.

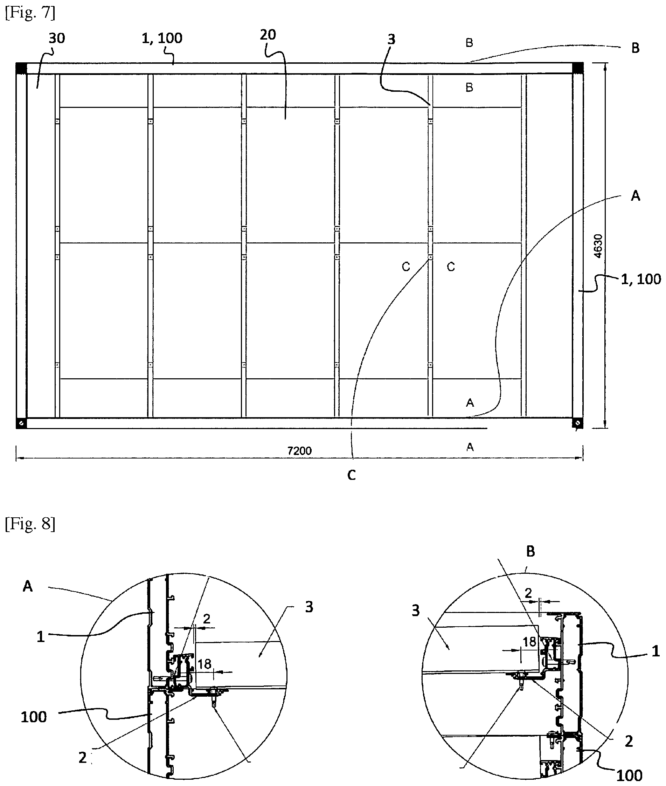

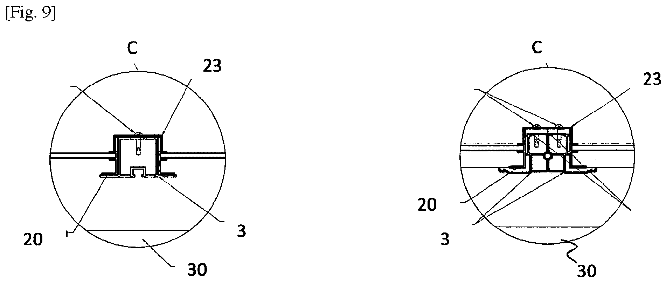

Les panneaux sont mis et maintenus en position par des supports 2 de poutre et des poutres 3. En référence aux figures 1 à 7 et 9, les panneaux solaires 20 sont soutenus par des poutres 3 s'étendant de part et d'autre de côtés latéraux des panneaux solaires et relient deux côtés opposés, ou longerons opposés de l'armature 1. De préférence, les poutres sont des profilés 3 en forme de « T » sur la vue à gauche de la figure 9, ou en forme de « L » sur la vue à droite de la figure 9.

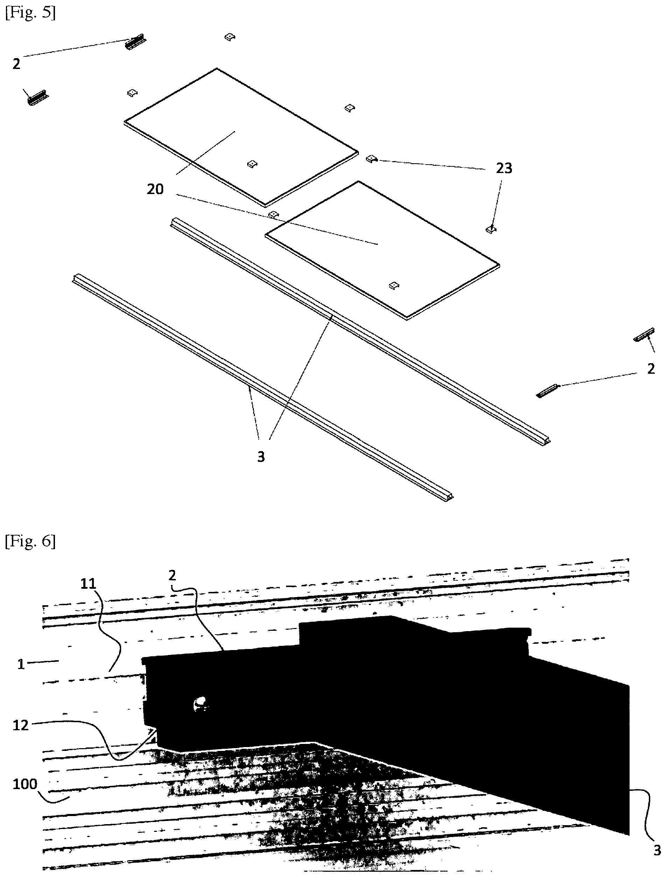

En référence aux figures 4, 6, 7 et 8, les poutres ou profilés 3 sont fixées à l'armature 1 par l'intermédiaire des supports 2. Les supports sont fixés à différente hauteur de la surface d'encadrement intérieur de l'armature de manière à incliner les panneaux solaires. En référence à la figure 6, la surface d'encadrement intérieur de l'armature présente au moins une rainure 11 faisant saillie pour régler la position du support 2. En outre le support 2 comprend une rainure 12 pour régler la position des extrémités des poutre 3.

L'armature 1 présente une épaisseur supérieure à l'épaisseur de l'assemblage poutre et support, voir figure 6, de manière à masquer la vue des panneaux solaires d'un de point de vue latérale.

La cadre de toit 100 ou l'ensemble cadre de toit et armature présente une hauteur ou une épaisseur englobant l'ensemble panneaux de toiture et panneaux solaires. De préférence la hauteur ou l'épaisseur d'au moins un côté du cadre de toit ou au moins un longeron, de préférence formé par une double poutre proposée ci-dessus, est supérieure à la hauteur ou l'épaisseur de l'ensemble comprenant l'au moins un élément de toiture et l'au moins un panneau solaire montés, et de préférence inclinés.

En référence aux figures 2 et 5, les panneaux solaires sont fixés aux poutres 3 par des moyens de verrouillage, en particulier des agrafes 23 en forme de « U ».

Bien entendu l'invention n'est pas limitée au(x) mode(s) de mise en oeuvre décrit(s) et on peut y apporter des variantes de réalisation sans sortir du cadre de l'invention tel que défini par les revendications.

## Revendications

1. Système de fixation d'au moins un panneau solaire (20) sur un cadre existant (100) de toit d'un abri (200) **caractérisé en ce qu'**il comprend :
- une armature (1) agencée pour être disposée sur le cadre existant (100), l'armature présentant une surface d'encadrement intérieure (10),
- au moins une poutre (3) reliant l'armature (1) en deux points et agencée pour porter au moins en partie l'au moins un panneau solaire (20),
- au moins un support (2) de poutre, reliant une face de poutre à l'armature.

2. Système de fixation selon la revendication précédente dans lequel l'armature (1) comprend des moyens (11) faisant saillie sur une surface d'encadrement intérieure (10), de préférence au moins une rainure, de manière à régler la position de l'au moins une poutre.

3. Système de fixation selon la revendication 1 ou 2 dans lequel l'au moins un support (2) de poutre comprend au moins une rainure (12), de préférence dont la direction est parallèle à la direction du côté de l'armature considéré.

4. Système de fixation selon l'une des revendications précédentes dans lequel l'armature (1) présente une forme polygonale, et l'au moins une poutre (3) relie deux côtés de l'armature.

5. Système de fixation selon l'une des revendications précédentes, dans lequel l'au moins une poutre (3) est un profilé présentant une section transversale en forme de « L » ou de « T ».

6. Structure (200) comprenant un cadre de toit (100) portant au moins un élément de toiture (30), au moins un poteau (40) pour maintenir en hauteur l'au moins un élément de toiture (30), **caractérisée en ce qu'**elle comprend au moins un panneau solaire (20) disposé au-dessus dudit au moins un élément de toiture (30) par l'intermédiaire d'un système de fixation comprenant :
- au moins une poutre (3) reliant le cadre de toit (1) en deux points et agencée pour porter au moins en partie l'au moins un panneau solaire (20),
- au moins un support (2) de poutre, reliant une face de poutre au cadre de toit.

7. Structure selon la revendication précédente, dans laquelle l'au moins un élément de toiture (30) est un panneau ou une paroi de toiture comprenant plusieurs couches comprenant une couche de matériau isolant entre deux couches de revêtement, de préférence au moins une couche de revêtement de couleur blanche.

8. Structure selon la revendication 6 ou 7, dans laquelle l'au moins un panneau solaire (20) est du type monofacial ou bi-facial.

9. Structure selon l'une des revendications 6 à 8, comprenant en outre des batteries électriques agencées pour stocker l'énergie électrique issue de l'au moins un panneau solaire (20).

10. Carport comprenant une structure selon l'une des revendications 6 à 9.
